# EUROPEAN PATENT APPLICATION

(11) **EP 2 065 809 A1**
(43) Date of publication of application: **03.06.2009**
(21) Application number: 07121374.8
(22) Date of filing: 22.11.2007
(51) Int. Cl.: G06F 17/24, G06F 17/30, G06Q 10/00

(54) **Annotation structure for web pages, system and method for annotating web pages**

(71) Applicant: InfoDOC Technology Corporation, Zhongzheng District, Taipei (TW)
(72) Inventor: Shao Shin-Chung, Zhongzheng District, Taipei (TW); Tsai, Cheng-Wei, Zhongzheng District, Taipei (TW); Kao, Chuan-Kai, Zhongzheng District, Taipei (TW); Lee, Hao-Yu, Zhongzheng District, Taipei (TW)
(74) Representative: Beck & Rössig European Patent Attorneys

(57) **Abstract**

An annotation structure for web pages, a system and a method for annotating web pages are disclosed. In the invention, a web page displayed by a web browser is treated as a bottom web page, and an XML-based vector graphic annotation is overlaid on the bottom web page, wherein the XML-based vector graphic annotation includes annotation layers created by users. All users can create their respective annotation layer on the same bottom web page, edit various annotation objects on their own annotation layer, and save the edited annotation objects onto their respective annotation layer, wherein the annotation objects are XML-based vector graphic elements having better controllability. This will constitute multiple vector graphic annotation layers on the bottom web page. When sharing, the user only needs to transmit the address (e.g. URL) of the bottom web page and his own annotation layer to other users. When the user changes an annotation layer, other users only need to update the changed annotation layer instead of updating the whole annotation structure for the web page. Accordingly, the work of co-editing is performed more efficiently in the manner of the differential update.

## Description

### BACKGROUND OF THE INVENTION

### 1. Field of the Invention

The present invention relates to a system and a method for annotating web pages and particularly to a system and a method for annotating web pages that employs XML (eXtensible Markup Language)-based vector graphic technique.

### 2. Description of the Prior Art

In the era of the Internet web pages are one of main information sources for many people. Nowadays there are billions of web pages in the world to provide all kinds of information services. And the number of the web pages still is growing constantly. Many people have the urge to add their annotations such as comments, remarks or thoughts on the contents of the web pages they are reading, For instance, adding personal comments on news, remarks on the trend graphics of stock prices, personal thoughts on the instruction web pages, and the like. In such occasions people usually have the web pages printed out and make the annotations on the printed paper. When they want to share those web pages and annotations to other people, such as a teacher wants to share the instruction web pages and his/her annotations to students, the general approach is making paper copies and distributing them. It is not convenient nor environmental friendly.

At present there is a method for annotating web pages allowing users to convert all or part of web pages to a raster image (or bitmap) file in a file format of BMP, GIF, JPEG, PNG or the like. Through annotation software annotations can be added to the bitmap file containing the web pages (called web annotation bitmap file in short hereinafter). Then the web annotation bitmap file can be transmitted to other people for sharing. However, such a method still has flaws, notably: first, the bitmap file converted from the web pages takes a huge space, and storing and transmission consume a greater storage and broadband resources; second, the annotation made on the web annotation bitmap file also is a bitmap, the controllability is not desirable, such as movement, replication, rotation, mask, shrink, alteration of color and opacity and the like; third, to share the web annotation bitmap file has to be done by replicating and sending the whole file to each user. Each user has his/her own replicated file. The user who makes his/her annotation layer cannot update the replicated files of other users that are originated from the same source. Namely the sharing group cannot co-edit the same web page annotations; fourth, after a web annotation bitmap file has been annotated by many people, its contents look cluttered. Users cannot make selective deletions or mask unnecessary annotation as desired; fifth, while some software such as CorelDraw or Illustrator of Adobe can convert the web pages to other vector graphic files it supports, and also provide annotation tools to do vector graphic editing for such vector graphic files, those software are mostly window-based applications, and do not support differential update and co-editing. They also cannot be directly displayed on the web browser.

There is another approach (such as Google Notebook) which allow users to directly enter the address (e.g. URL) and annotations such as texts, graphics, hyperlinks or the likes can be directly added to the web pages opened by the web browser. Users also can move, delete, edit and publish the annotations. The annotations are a file in HTML (HyperText Markup Language) format. Such a file is smaller than the bitmap file containing the annotations previously discussed. And the users also can edit the annotations by altering CSS (Cascading Style Sheets) attribute of each annotation. Hence controllability improves. But making annotations on the web page of HTML format also has drawbacks, such as no functions of graphic annotations such as handwriting or highlighter. Moreover, the HTML format does not provide multiple layers structure, and does not allow the user to make annotations on different layers of the same web page. Hence it does not support sharing, differential update and co-editing.

### SUMMARY OF THE INVENTION

In view of the aforesaid problems, the present invention aims to provide a data structure for web page annotation and a system and a method for annotating web pages that allows users to overlay a plurality of annotation layers on one web page and allows the users to make various annotations (or annotation objects) such as addition, storing, deletion or editing to be made on the their own annotation layers. The annotation objects are XML-based vector graphic elements and have desirable controllability, and allow differential update to share the annotation layer or objects through networks to achieve sharing and co-editing of web page annotations.

The annotation structure for web pages, and the system and the method for annotating web pages according to the invention treat a web page opened by an user through a web browser as a bottom web page, and overlays thereon an XML-based vector graphic annotation which does not affect the display of the bottom web page. The XML-based vector graphic annotation includes an annotation layer created by the user. Each user can build his/her own annotation layer on the same web page such that multiple layers of vector graphic annotation layers overlay on the same bottom layer web page. User can edit different annotation objects on the bottom web page and place them to his/her own annotation layer. The annotation objects are XML-based vector graphic elements, thus have great controllability. When the user wants to share the web page annotations, it can be accomplished by sending the address (e.g. URL) of the bottom web page and the annotation layer belonged to the user to other intended sharing users. In addition, in the event that one user changes a selected annotation layer, other sharing users can make differential update by merely altering the annotation objects or replacing the changed annotation layer.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a schematic view of data structure of an embodiment of the invention showing a web page overlaid by a plurality of vector graphic annotation layers.
FIG. 2 is a block diagram of the system for annotating web pages according to an embodiment of the invention.
FIGS. 3A and 3B are flowcharts of the method for annotating web pages according to an embodiment of the invention including addition, storing, deletion and editing of annotation objects and activation of differential update.
FIG. 4 is a picture of actual web page annotations according to an embodiment of the invention.
FIG. 5 is a flowchart of the method for annotating web pages according to an embodiment of the invention including converting a portion of contents of vector graphics to vector graphic elements.

### DESCRIPTION OF EMBODIMENTS

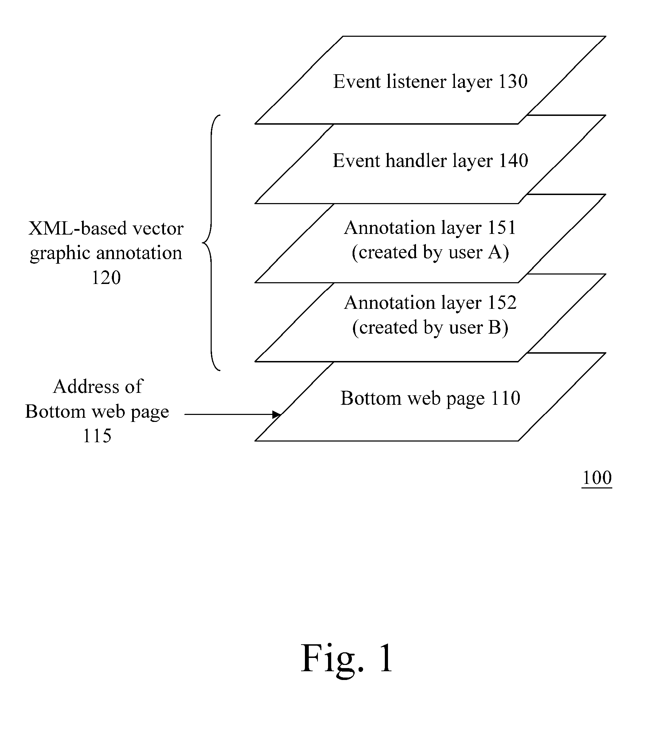

Refer to FIG. 1 for the data structure of an embodiment of the invention showing a web page overlaid by a plurality of vector graphic annotation layers. The annotation structure 100 includes a bottom web page 110 and an XML-based vector graphic annotation 120. The XML-based vector graphic annotation 120 further includes an event listener layer 130, an event handler layer 140 and annotation layers created by users such annotation layers 151 and 152 built respectively by users A and B. The whole annotation structure 100 is displayed through a web browser which is supported by an XML-based vector graphic engine.

The bottom web page 110 is broadly defined as a document or file opened and displayed by the web browser. It can be a web page provided by any web site or a blank web page supplied and opened by the web browser, or an HTML file converted from a Word, Excel or PowerPoint file of Microsoft or a graphic file (as some web browsers cannot directly open the Word, Excel or PowerPoint file of Microsoft or graphic file, hence the HTML file has to be converted first to support cross platform browsers). If the bottom web page 110 is provided by a web site, users can open a designated address 115 of the web page 110 so that the web browser of the invention can place the web page 110 addressed by the address 115 to the bottom layer of the annotation structure 100. The web page 110 becomes the bottom web page. And the address 115 of the web page 110 is the address of the bottom web page. In an embodiment the annotation structure 100 is an HTML file which includes a <iframe> element with a src attribute pointing to the address 115 of the opened web page 110 designated by an user. Hence once the user opens the HTML file 100, the <iframe> element addresses the web page 110 and imbeds it in the HTML file 100 as the bottom web page 110. If the bottom web page 110 is a blank web page opened by the web browser, the web browser of the invention serves as an application of a painter, a web page scrapbook or a digital whiteboard on the web browser.

In the XML-based vector graphic annotation 120, the event listener layer 130 and annotation layers 151 and 152 include XML-based vector graphic elements. The event handler layer 140 includes programs written through scripts programming language. The XML-based vector graphics have many types, such as vector graphics of SVG (Scalable Vector Graphics) set by W3C (World Wide Web Consortium) using the scripts programming language of ECMAScript, or MXML vector graphics set by Adobe with the scripts programming language of ActionScript, or XAML vector graphics of Microsoft. Through API (Application Programming Interface) of XML such as DOM (Document Object Model) users can process (such as addition, deletion, edit or the like) the XML vector graphic elements through programs written in scripts programming language. In the invention, the display of the event listener layer 130 and the annotation layers 151 and 152 do not mask the bottom web page 110. Only the display of the annotation objects added by users to the annotation layers 151 and 152 will mask the bottom web page 110. It is presented in a format of adding an annotation (namely annotation objects) on the web page (namely the bottom web page 110). In the invention, the annotation objects include XML-based vector graphic elements such as shapes, texts, handwriting, highlighters, stick notes, hyperlinks, bookmarks, eraser, icons, images or audio. The event handler layer 140 contains only programs, thus does not appear. It includes programs to process the XML-based vector graphic elements mentioned above such as shapes, texts, handwriting and the like.

The event listener layer 130 aims to receive or capture events triggered by the users through input devices (such as a mouse or keyboard), then transfer to a corresponding event handler in the event handler layer 140 to process. For instance, if the events are triggered by a mouse (such as mouse click, mousedown, mousemove, mouseup, mouseover, and the like), the event handler layer 140 has a corresponding program (such as adding annotation objects to the annotation layer created by the users) to execute a matching task type (such as addition, saving, deletion or edit of the annotation objects) on the bottom web page 110 desired by the user. The event listener layer 130 is an XML-based vector graphic element. It an embodiment of the invention its size and location are set by the coordinates and length and width attributes of the element, and are coincided with the bottom web page 110. And the opacity attribute is set proximate to 0 (fully transparent). Hence the event listener layer 130 does not mask the bottom web page 110, but can capture any event triggered by the input device (such as mouse) on a corresponding location of the bottom web page 110.

For each annotation layer (such as the annotation layer 151 created by user A), the annotation objects attached thereon are child notes. Moreover, each annotation layer includes attributes such as an identification, an author, a co-author, a create time, a save time, an authorization attributes and the like. The author is the user who creates the annotation layer. The identification attribute records the unique identification code of the annotation layer. This is required because the XML-based vector graphic annotation 120 of the same web page 110 could include many annotation layers (such as annotation layers 151 and 152), and the annotation layer could require differential update during co-editing. Hence each annotation layer requires an unique identification code for identification. The author attribute records the author of the annotation layer and gives the author maximum authority of the annotation layer. For instance, the author is allowed to add, delete, edit and replicate the annotation objects on the annotation layer. The co-author attribute records the rest co-authors. The author can define the authorization of the co-authors in the authorization attribute. The create time attribute records the create time of the annotation layer. The saving attribute records the final save time of the annotation layer. The authorization attribute records the authorization of the co-authors and users. For instance, the co-authors are permitted to add, edit and replicate the annotation objects on the annotation layer, but other users are allowed only to replicate the annotation objects on the annotation layer.

In one embodiment, to overlay the XML-based vector graphic annotation 120 on the bottom web page 110 means to insert a <div> element in the HTML file 100 to serve as the XML-based vector graphic annotation 120. The HTML file 100 has already contained an <iframe> element, and its attribute src is pointing to the address 115 of the web page 110. Next, the <iframe> element and the style attribute of the <div> element are set to absolute; and same attribute values are set for width, height, top and left to allow the <iframe> element and the <div> element to have a same coordinate position and size, this is equivalent to overlay the XML-based vector graphic annotation 120 fully on the bottom web page 110. The <div> element previously discussed (namely the XML-based vector graphic annotation 120) has an imbedded XML-based vector graphic element to serve as the event listener layer 130. By setting the opacity attribute approximate to 0 (fully transparent), wmode attribute is transparent or other like attribute setting can make the event listener layer 130 close to a transparent condition without masking the diaplay of the bottom web page 110.

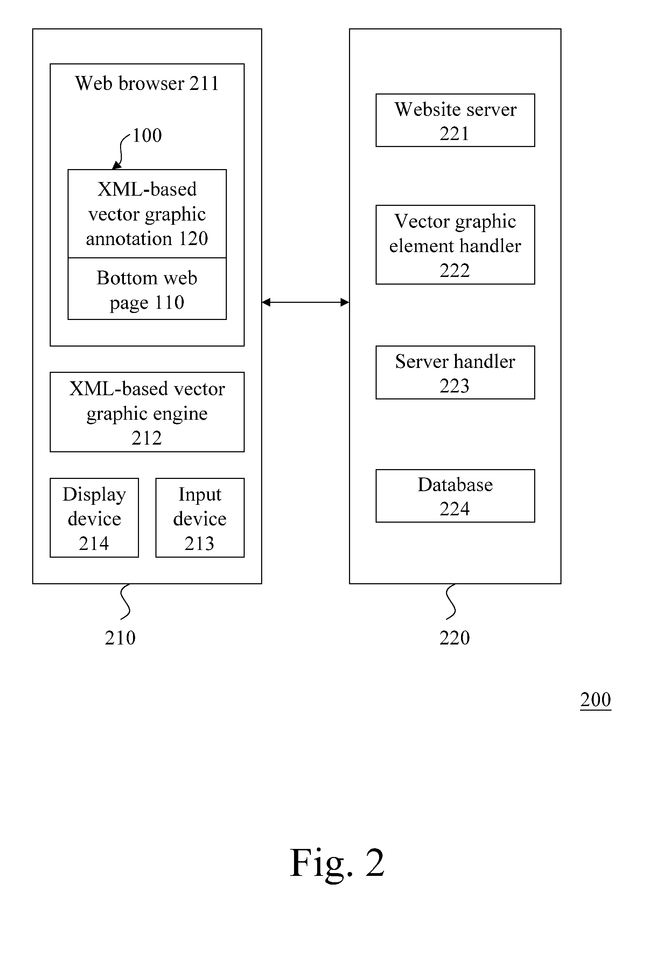

FIG. 2 shows a system block diagram of an embodiment of the web page annotating system for annotating web pages of the invention. The system for annotating web pages 200 according to the invention includes a client device 210 and a server device 220 that communicate through a network. The client device 210 is a personal computer, tablet computer, notebook computer, PDA or the like that includes a web browser 211, an XML-based vector graphic engine 212, an input device 213 and a display device 214. The server device 220 includes a website server 221, a vector graphic element handler 222, a server handler 223 and a database 224.

Also referring to FIGS. 1 and 2, after the client device 210 has downloaded the vector graphic element handler 222 from the server device 220 to support the web browser 211, the web browser 211 can open and display the annotation structure 100. The XML-based vector graphic engine 212 aims to support the web browser 211 to display XML-based vector graphics on the annotation structure 100. The input device 213 (such as mouse or keyboard) and display device 214 (such as LCD) aim to provide a human-machine interface to enable the users to do addition, deletion or editing of annotation objects on the bottom web page 110 of the annotation structure 100 for the XML-based vector graphic annotation 120. In the server device 220 the website server 221 aims to transmit data between the client device 210 and the server device 220. The vector graphic element handler 222 provides event handlers of the XML vector graphic elements in the event handler layer 140 on the annotation structure 100 on the client device 210. The server handler 223 aims to retrieve and store data in the database 224, then transmit the data through the website server 221. The database 224 stores the annotation layers, annotation objects and the address of the bottom web page corresponding to the annotation layers. In an embodiment, to overlay the XML-based vector graphic annotation 120 on the bottom web page 110 is to insert a <div> element in the HTML file 100 to serve as the XML-based vector graphic annotation 120. The HTML file 100 has already contained an <iframe> element, and its attribute src is pointing to the address 115 of the web page 110. Next, the <iframe> element and the position attributes of the style attribute of the <div> element are set to absolute; and same attribute values are set for width, height, top and left to allow the <iframe> element and the <div> element to have same coordinate position and size, this is equivalent to overlay the XML-based vector graphic annotation 120 fully on the bottom web page 110. The <div> element previously discussed (namely the XML-based vector graphic annotation 120) has an imbedded XML-based vector graphic element to serve as the event listener layer 130. By setting the opacity attribute approximate to 0 (fully transparent), wmode attribute is transparent or other like attribute setting can make the event listener layer 130 close to a transparent condition without masking the display of the bottom web page 110.

In an embodiment, when an user wants to open a web page of an external web site on the client device 210 through the web browser 211, the web browser 211 treats the web page of the external web site as the bottom web page 110, and overlays a layer of XML-based vector graphic annotation 120 to form the annotation structure 100. The event handler layer 140 of the XML-based vector graphic annotation 120 is downloaded from the vector graphic element handler 22 of the server device 220. Then the user creates an annotation layer on the bottom web page 110 through the web browser 211 and adds new annotation objects thereon. Finally, after the user has finished web annotations and the client device 210 has issued a save command, the client device 210 merely uploads the changed annotation layer, annotation objects and the corresponding address 115 of the bottom web page 110 to the server device 220, and stores in the database 224 through the website server 221 and server handler 223.

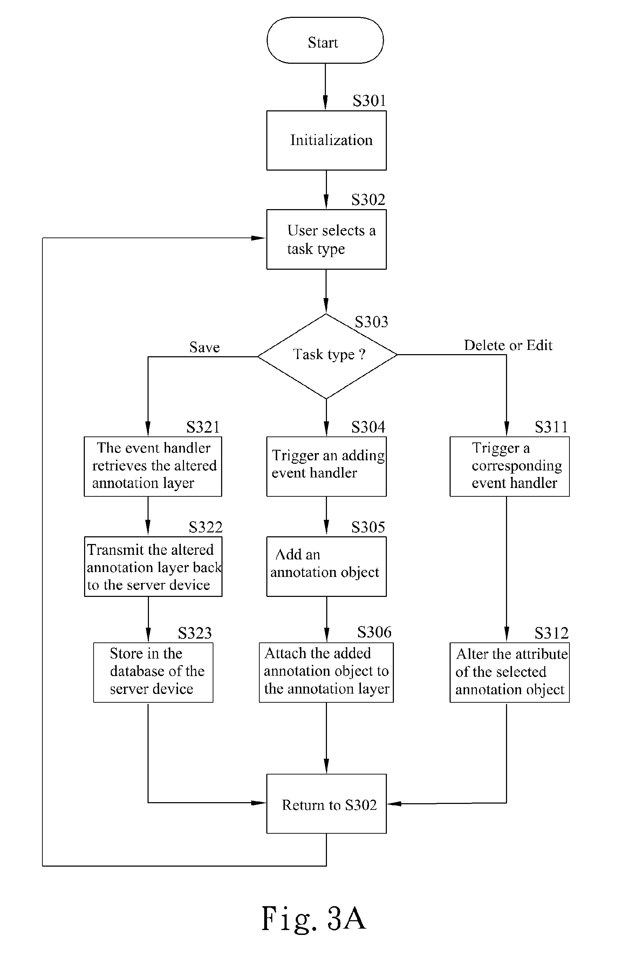

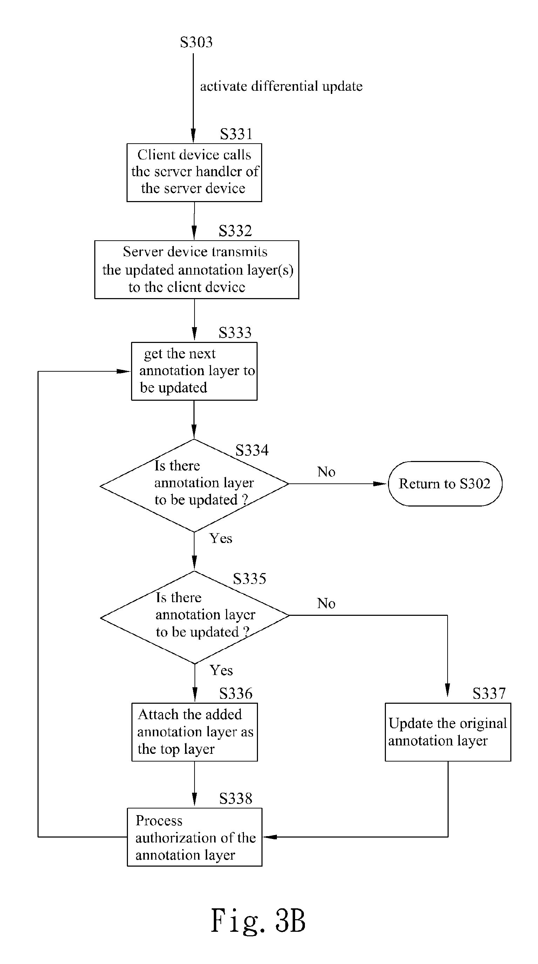

Refer to FIGS. 3A and 3B for flowcharts of the method for annotating web pages according to an embodiment of the invention that includes addition, saving, deletion and editing of annotation objects and activation of differential update. Also referring to FIGS. 1 and 2, first, execute initialization process at the client device 210, including download the vector graphic element handler 222 through the website server 221, and download annotation layers (such as the annotation layers 151 and 152) from the database 224 that give users authority to overlay the bottom web page 110 and set the event listener layer 130 to receive events triggered by other users (step S301); next, an user selects a desired task type, including addition, saving, deletion, editing of annotation objects or activate differential update and the like (step S302); then the client device 210 determines the task type selected by the user (step S303).

For the task type of adding annotation objects, the event listener layer 130 receives the events triggered by the user (such as mouse click or the like) and knows that the process to be executed by the user is adding an annotation object, and the element type of the annotation object is text, handwriting, highlighter or the like, they are transferred to the event handler layer 140 to be processed by an adding event handler, such as recording the coordinates of mouse moving position and movement track (step S304); thereafter, the adding event handler adds a corresponding annotation object according to the type of user selected annotation object and recorded mouse position and movement track (step S305); next, the added annotation object is attached to the annotation layer owned by the user as a sub-node. While the new annotation object is added, tracking information attributes such as the date and time of adding are entered (step S306). Finally, return to step S302 to prepare receiving the next process. All the annotation objects are XML-based vector graphic elements, and are drawn into graphics and displayed on the web browser 211 through the XML-based vector graphic engine 212 according to the type and attribute of the annotation object element.

If the task type is deletion or editing (such as moving, masking, shrinking, rotation or the like) of an existing object, the event listener layer 130 receives the events triggered by the user and is informed of the desired task type being deletion or editing of an annotation object, it is transferred to the event handler layer 140 to be processed by a corresponding even event handler (step S311). For instance, for moving the annotation object, when the user moves the mouse, the event handler records the coordinates of the mouse position and movement track, then alters the position attribute value of the position of the annotation object (step S312). After the attribute value has been changed, the picture of the annotation object has to be redone by the graphic drawing engine 212. Finally, return to step S302 to prepare receiving the next process. Thus by altering the attribute value of the annotation object through the XML-based vector graphic annotation deletion or editing (such as moving, masking, shrinking, rotation or the like) of the annotation object can be performed.

If the task type is saving an annotation object, the event listener layer 130 receives the events triggered by the user and is informed the desired task type being saving the annotation object, it is transferred to the event handler layer 140 to be processed by a corresponding even event handler. The event handler retrieves the annotation object which has been altered according to the user ID and XML-based vector graphic annotation 120 (step S321). Then the altered annotation layer or the altered annotation object in the altered annotation layer is sent back to the server device 220 through the network (step S322). The server device 220 receives the altered annotation layer/object and stores it in the database 224 (step S232). Finally, return to step S302 to prepare receiving the next process.

If the task type is activation of differential update, the event listener layer 130 receives the events triggered by the user and is informed the desired task type being activation of differential update, the client device 210 calls the server handler 223 of the server device 220 to process (step S331). The event handler of the server device 220 determines the difference of the annotation layer currently used by the user on the web page 110 and the corresponding annotation layer in the database 224, the updated annotation layer in the database 224 is gathered and sent back to the client device 210 (step S332). Then each updated annotation layer is compared in the client device 210 with the annotation layer currently used by the user to add an annotation layer originally not existed, or alter the original annotation layer (such as adding, deletion or editing of the annotation objects on the original annotation layer). For instance, start by getting an update annotation layer (step S333); as the updated annotation layer is obtained, a next step is proceeded ("Yes" path of step S334). Next, determine whether the updated annotation layer is a new annotation layer in terms of the current annotation layer used by the user on the web page 110 (step S335); if yes, the new annotation layer is attached to the top layer of the annotation layer, while the annotation object of one of the annotation layers masks the annotation object of the lower annotation layer (step S336); otherwise alter the current annotation layer on the web page 110 used by the user according to the updated annotation layer if addition, deletion or editing is being used by the user on the web page 110 (step S337). Then process the authorization of adding or update annotation layer (step S338), and process update of the next annotation layer (step S333) until all the updates of the annotation layer have been finished, and return to step S302 to prepare receiving the next process ("No" path of step S334).

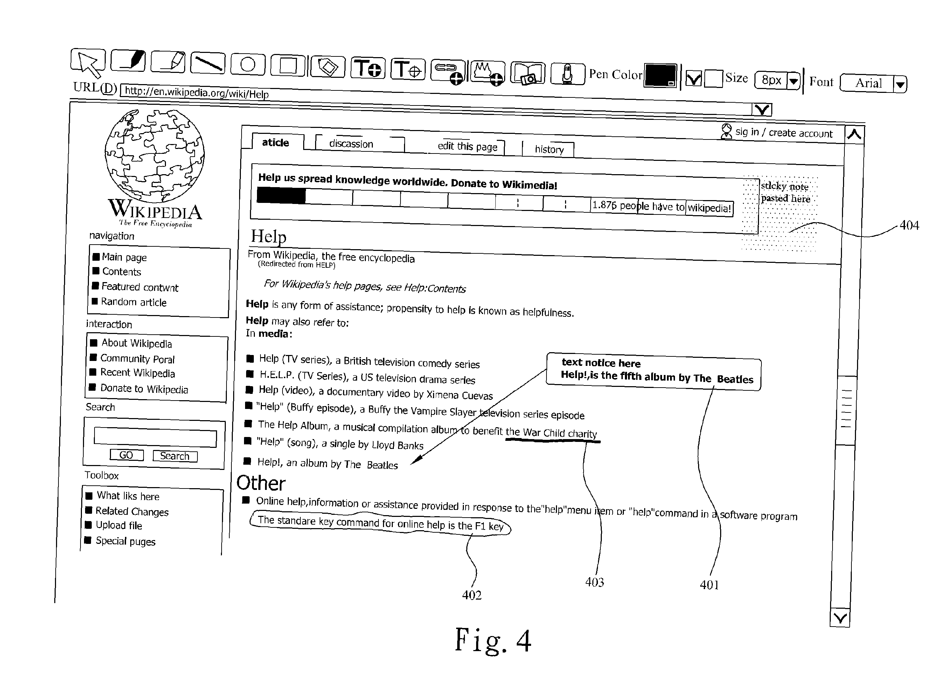

Refer to FIG. 4 for a picture of actual web page annotations according to an embodiment of the invention. The web page is the home page of Wikipedia. User enters the address of the web page, namely http://www.wikipedia.org. The invention opens the web page according the address to serve as the bottom web page 110, and overlays the XML-based vector graphic annotation 120 on the bottom web page 110. Users can add annotation objects on the annotation layer of the XML-based vector graphic annotation 120, such as those represented by 401, 402, 03 and 404 that are respectively a text, handwriting, highlighter and stick note. These annotation objects (such as the objects indicated by 401-404) are displayed by masking the bottom web page 110. In addition, the annotation objects are XML-based vector graphic elements, and have a great controllability. When to share to other users, only the added or edited annotation layer or annotation objects are transmitted to achieve the object of differential update.

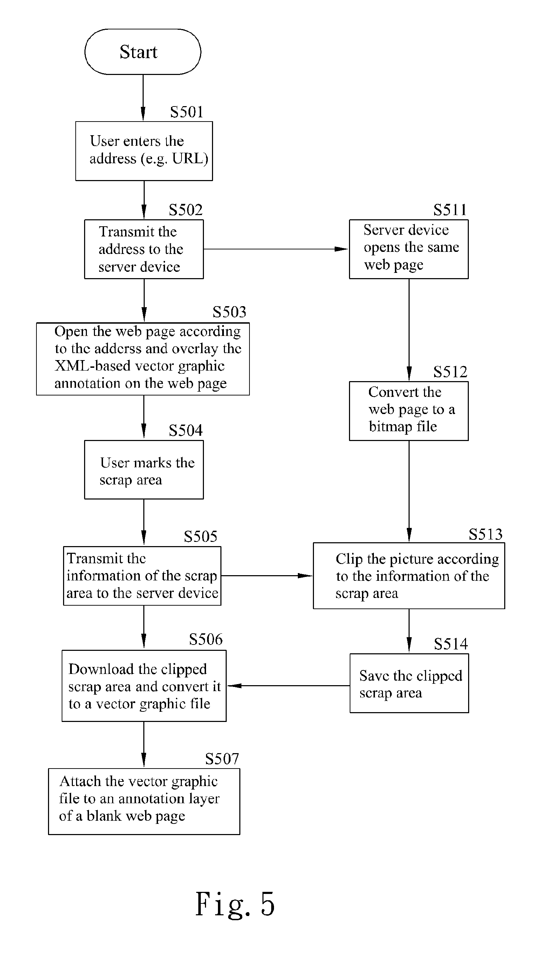

The invention treats the web page which has been designated opened or included annotations as the bottom web page 110 without converting it to a graphic file. Moreover, the server device 220 does not save the bottom web page 110 but store only the bottom web page address 115. Hence if an user opens a dynamic web page, namely the content of the web page is changed with time, such as stock index charts, adding annotations on such a bottom web page 110 will generate not matching content as time passes. The invention provides a method which captures a portion of the content of the web page through vector graphic and converts to vector graphic elements. Referring to FIG. 5, when an user wants to capture a portion of picture of a selected web page, on the client device 210, enter the address of the web page on the web browser 211 (step 501); the address is transmitted to the server device 220 (step S502); after the web page is opened, an XML-based vector graphic annotation is overlaid on the web page (step S503); the server device 220 opens the web page according to the address transmitted from the client device 210 (step S511), and converts to a bitmap file (step S512); next, on the client device 210, user moves the mouse to draw a shape on the XML-based vector graphic annotation 120, such as a rectangle to mark a scrap area to be clipped (step S504). When the user release the mouse to trigger a mouseup event, the web page on the client device 210 displays position attributes values of scrollTop, scrollLeft, top and left, and the attributes of shape, coordinate locations, area scope of the scrap area (step S505). After the server device 220 has received the information of the scrap area, it captures the bitmap file of the designated area from the bitmap file converted from the web page (step S513), and stores in the database 224 (step S514). On the client device 210, the user can repeat clipping on different web pages, and retrieve the picture bitmap file of a portion of the picture on the web page from the database 224 to convert to a vector graphic file (step S506) to become elements to be added (or pasted) to the annotation layer of a blank web page opened by the user through the web browser 211 (step S507). In addition, the user also can add other types of annotation objects (XML-based vector graphic elements such as shapes, texts, handwriting and the like) on the annotation layer of the blank web page.

As a conclusion, the date structure for web page annotation, a system and a method for annotating web pages of the invention treat the web page opened by users through the web browser as the bottom web page, and overlay an XML-based vector graphic annotation thereon without affecting the display of the bottom web page. Each user can create his/her own annotation layer on the same web page and overlay on the same bottom web page to become multiple vector graphic annotation layers. And users can edit different annotation objects on the bottom web page and place them to their own annotation layers. These annotation objects are XML-based vector graphic elements and have a great controllability. When one user wants to share the web page annotations with other people, he/she only has to send the address of the bottom web page and his/her own annotation layer to the intended sharing users. In addition, when an user alters a selected annotation layer, the sharing users need only to update the altered annotation objects or replace the altered annotation layer without the need of replicating the entire file. It can process differential update more efficiently to perform co-editing.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. An annotation structure for web pages, comprising:
a bottom web page, wherein the bottom web page includes a web page provided by a web site, a blank web page opened by a web browser or an HTML file converted from a general file; and
an XML-based vector graphic annotation overlaid on the bottom web page, including:
at least one annotation layer attached by at least one annotation object, a user being allowed to add, save, delete or edit the annotation layer or the annotation object or activate differential update of the annotation layer or the annotation object according to a given authorization, wherein the annotation object includes a shape, a text, a handwriting, a highlighter, a stick note, a hyperlink, a bookmarks, an eraser, an icon, an image or an audio XML-based vector graphic element;
an event handler layer which includes at least one event handler; and
an event listener layer which receives an event related to the annotation layer triggered by the user and calls the corresponding event handler in the event handler layer to process the event;
wherein the event listener layer and the annotation layer consist of XML-based vector graphic elements and do not mask the display of the bottom web page; and, the annotation object added to the annotation layer is an XML-based vector graphic element and masks the display of the bottom web page to present the bottom web page with the annotation object added thereon.

2. The annotation structure for web pages of claim 1, wherein the annotation layer has attributes including:
an identification attribute to record a unique identification code of the annotation layer;
an author attribute to record an author who creates the annotation layer and is given a maximum authorization;
a co-author attribute to record co-authors of the annotation layer;
a create time attribute to record a create time of the annotation layer;
a save time attribute to record a final save time of the annotation layer; and
an authorization attribute to record authorization of the co-authors and other users defined by the author.

3. A system for annotating web pages adopting the annotation structure for web pages of claim 1, comprising:
a client device including:
a web browser to open and display the annotation structure for web pages;
an XML-based vector graphic engine to support the web browser to display the XML-based vector graphic elements in the annotation structure for web pages;
an input device and a display device to provide a human-machine interface, wherein the input device allow the users to trigger the event; and
a server device including:
a website server to process data transmission between the client device and the server device;
a vector graphic element handler to provide the event handler required by the event handler layer;
a database to store the annotation layer, the annotation object and an address of the bottom web page corresponding to the annotation layer; and
a server handler to store and retrieve data in the database.

4. The system for annotating web pages of claim 3, wherein the client device includes a personal computer, a tablet computer, a notebook computer or a personal digital assistant.

5. A method for annotating web pages adopting the annotation structure for web pages of claim 1, comprising:
opening a web page through a web browser on a client device to serve as the bottom web page;
overlaying the event listener layer and the event handler layer on the bottom web layer;
setting the event listener layer to prepare receiving the event triggered by the user;
downloading from a server device through a network existing annotation layers related to the bottom web page and overlaying the existing annotation layers on the bottom web page when the user intends to edit the existing annotation layer on the bottom web page, and allowing the user to add, save, delete or edit the annotation object on the existing annotation layer according to the authorization;
overlaying a new annotation layer created by the user on the bottom web page when the user intends to create the annotation layer, the user having a maximum authorization over the annotation layer being created and being allowed to add, save, delete or edit the annotation object on the annotation layer and to define authorization of other users over the created annotation layer;
transmitting and saving the altered annotation layer or annotation object and the corresponding address of the bottom web page of the annotation layer from the client device to the server device when the user intends to save the annotation layer; and
transmitting the address of the bottom web page and the annotation layer owned by the user to other users through the server device when the user intends to share the web page annotation structure with the other users; only the altered annotation layer or annotation object being updated by the other users through the server device in the event that a selected annotation layer being altered by the user.

6. The method for annotating web pages of claim 5, wherein the step to add the annotation object to the annotation layer includes:
receiving the event for adding the annotation object triggered by the user on the event listener layer and transferring to the corresponding event handler in the event handler layer to perform the process;
recording the event by the event handler to generate a corresponding annotation object; and
attaching the corresponding annotation object to the annotation layer.

7. The method for annotating web pages of claim 5 or 6, wherein the step to delete or edit the annotation object on the annotation layer includes:
receiving the event for deleting or editing the annotation object triggered by the user on the event listener layer and transferring to the corresponding event handler in the event handler layer to perform the process; and
recording the event by the event handler to delete the corresponding annotation object or edit the attribute of the corresponding annotation object.

8. The method for annotating web pages of one of claims 5 to 7, wherein the step to save the annotation object on the annotation layer includes:
receiving the event for saving the annotation object triggered by the user on the event listener layer and transferring to the corresponding event handler in the event
handler layer to perform the process;
retrieving the altered annotation layer or annotation object from the XML-based vector graphic annotation by the event handler;
transmitting the altered annotation layer or annotation object to the server device through the network; and
receiving and saving the altered annotation layer or annotation object by the server device.

9. The method for annotating web pages of one of claims 5 to 8, wherein the step to activate the differential update of the annotation object on the annotation layer includes:
receiving the event for activating the differential update triggered by the user on the event listener layer and the client device calling the corresponding event handler in the server device to perform the process;
judging by a server handler differences of the annotation layer on the bottom web page currently used by the user and a corresponding annotation layer stored in the server device;
gathering and transmitting the altered annotation layer stored in the server device to the client device; and
comparing each altered annotation layer with the annotation layer on the bottom web page currently used the user on the client device to add a new annotation layer not existed on the bottom web page or alter the original annotation layer.
